# EUROPEAN PATENT SPECIFICATION

(11) **EP 2 192 324 B1**
(45) Date of publication and mention of the grant of the patent: **21.11.2018**
(21) Application number: 09173918.5
(22) Date of filing: 23.10.2009
(51) Int. Cl.: F16F 9/36

(54) **Dual seal rod guide assembly with low friction disc**
Doppelte Dichtungsstangenanordnung mit Scheibe mit geringem Abrieb
Ensemble de guide de tige à double joint avec joint de friction léger

(30) Priority: 07.11.2008 US 291366
(43) Date of publication of application: 02.06.2010
(73) Proprietor: BWI Company Limited S.A., 1628 Luxembourg (LU)
(72) Inventor: Lun, Saiman, Centerville, OH 45458 (US)
(74) Representative: Fox-Male, Nicholas Vincent Humbert

(56) References cited:
- DE-A1- 2 642 932
- US-B2- 6 840 358
- US-B2- 6 883 649

## Description

### TECHNICAL FIELD

The invention relates to a damper guide assembly for a rod of a motor vehicle strut. More particularly, this invention relates to a guide assembly which minimizes internal friction and abrasion due to radial movement of the rod. Magneto-rheological (MR) fluid is filtered through the porous rod guide, and dual seals on either side of the bearing contain this carrier fluid, thus lubricating the bearing. A low friction disc is disposed between the tubular housing and the flexible assembly to reduce friction induced wear.

### BACKGROUND OF INVENTION

A magneto-rheological (MR) strut is a type of damper used in vehicle suspensions to absorb shock and as part of the load bearing structure. The MR strut is a hydraulic vibration damper which uses MR fluid together with a device that generates a magnetic field. A typical MR fluid contains ferromagnetic particles suspended in a low viscosity fluid. When the MR fluid is subjected to a magnetic field, the ferromagnetic particles align parallel to the magnetic field, changing the apparent viscosity of the fluid.
Therefore, the damping effect of the MR strut can be adjusted by varying the strength of the applied magnetic field.

In US Patent No. 6,840,358, Kos, et al. details the structure of a motor vehicle strut and a rod guide assembly for the strut. The rod is slidable in the housing and is held in alignment by a guide assembly. Features of the guide assembly include a compliant member adjacent a sleeve, a seal, a seal cover and a retainer attached to the housing. This rod guide configuration is limited by the ability of the single seal to resist abrasion from the MR fluid at the operating temperatures of the strut. A second limitation of this design is that the upper and lower face seals allow radial travel of the rod guide relative to the rod guide housing, resulting in face seal wear.

In US Patent No, 6,883,649, Lun discloses a closing system for use with a MR damper. The closing system
provides rod lubrication by using an internal filter to remove the microparticles from the MR fluid, and lubricating the system with MR carrier fluid.

It is desired to have a rod guide assembly for a MR strut which separates the temperature performance and abrasion resistance of the seals, while providing rod lubrication without the need for lubricant replenishment. It is also desired to reduce wear due to friction caused from radial movement of the rod.

### SUMMARY OF THE INVENTION

The present invention is defined by the appended claims.

In accordance with this invention, a guide assembly for a rod of a motor vehicle strut provides dual seals to separate the functions of temperature performance and abrasion resistance, the primary seal and the buffer seal. The primary seal withstands the entire temperature range of operation of the MR strut. The buffer seal prevents the microparticles in the MR fluid from abrading the bearing, allowing only clean carrier fluid to lubricate the bearing and the primary seal. The porous rod guide acts as a filter, allowing only clean carrier fluid of the MR fluid to pass through to the bearing. The rod guide flexible assembly is a one piece molded assembly made from two inserts with a flexible member in between. The flexible assembly outer insert has a outer diameter seal which may be molded to the flexible assembly or a separate o-ring. The outer diameter seal provides sealing contact between the flexible assembly and the rod guide housing.
The low-friction disc, disposed between the rod guide flexible assembly and the rod guide housing, reduces surface friction caused by radial movement of the rod. Further features and advantages of the invention will appear more clearly on a reading of the following detailed description of the preferred embodiment of the invention, which is given by way of non-limiting example only and with reference to the accompanying drawings.

### BRIEF DESCRIPTION OF DRAWINGS

This invention will be further described with reference to the accompanying drawings in which:
Fig. 1 is an exploded view of dual seal rod guide assembly with low friction disc.
Fig. 2 is a cross-sectional view of dual seal rod guide assembly with low friction disc.
Fig. 3 is a cross-sectional view of the flexible assembly.

### DESCRIPTION OF THE PREFERRED EMBODIMENTS

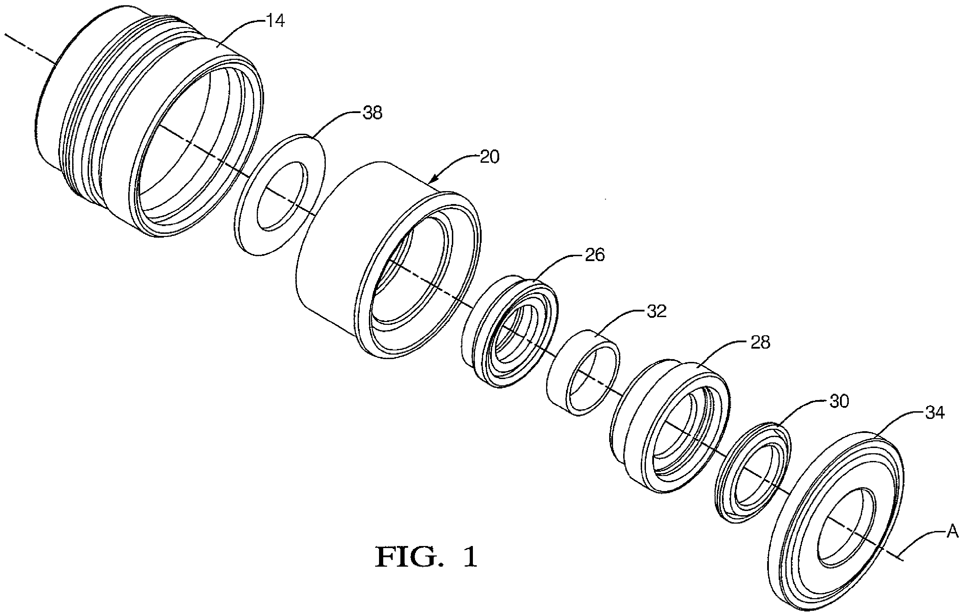

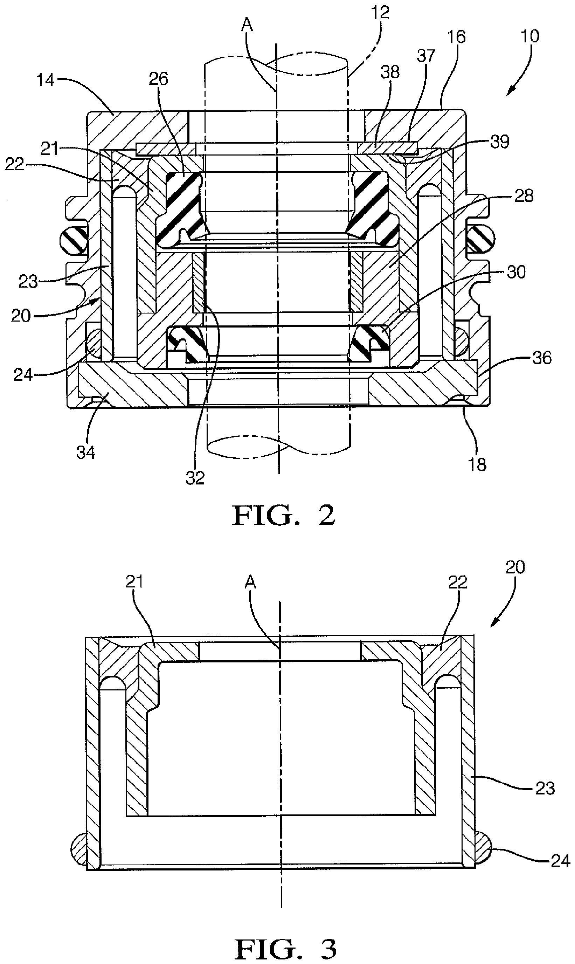

In accordance with a preferred embodiment of this invention, referring to Figs. 1-3, a rod guide assembly 10 about an axis A for a rod 12 of a motor vehicle strut is shown. The rod guide assembly 10 includes a tubular rod guide housing 14. The tubular housing 14 has a first end 16 and a second end 18. The first end 16 is configured with a clearance hole to accept the rod 12. A low friction disc 38 has a first surface 37 in contact with the inner face of the first end 16 of the housing 14. The disc 38 is preferably made of Teflon, however any material that would reduce friction on the inner face of the first end 16 of the housing 14 would be acceptable. Rod 12 passes through the center of the disc 38. The second surface 39 of the disc 38 is in contact with the rod guide flexible assembly 20. The disc 38 isolates the inner face of the first end 16 of housing 14 and the rod guide flexible assembly 20, reducing friction caused by radial movement of the rod 12. The rod guide flexible assembly 20 comprises a flexible member 22 molded between an inner insert 21 and an outer insert 23. The outer insert 23 is molded to an outer diameter seal 24, which seals the flexible assembly 20 to the rod guide housing 14. The flexible assembly 20 provides at least one opening for carrying a fluid. A primary seal 26 is positioned coaxially, along the same axis A, within the flexible assembly 20. The inner diameter of the primary seal 26 is in seal able contact with the rod 12. The outer diameter of the primary seal 26 is in seal able contact with the inner insert 21 of the flexible guide assembly 20. A rod guide 28 is adjacent the primary seal. The rod guide 28 is made of a porous material that is compatible with MR fluids, preferably powdered metal. The rod guide 28 is disposed adjacent the primary seal 26 and coaxially within the flexible assembly 20. The rod guide 28 is a barrier to the ferroelectric microparticles in the MR fluid, allowing only the MR carrier fluid to pass through. The MR carrier fluid provides excellent lubrication between the rod 12 and the primary seal 26 as well as for the bearing 32. Bearing 32 is located coaxial and internal the rod guide 28. Bearing 28 and MR carrier fluid for lubrication of bearing 28 are contained axially between primary seal 26 on one end and buffer seal 30 on the other. Buffer seal 30 has an inside diameter adjacent the rod 12 and an outside diameter adjacent the rod guide 28, and provides a barrier to the ferroelectric microparticles in the MR fluid. The buffer seal 30 prevents abrasion of the bearing 32 and the primary seal 26 by ferroelectric microparticles in the MR fluid. The annular retainer 34 is disposed adjacent the buffer seal 30 and coaxial the tubular housing 14. The inside diameter of annular retainer 34 is adjacent rod 12. The retainer 34 is configured such that the outside diameter can be press fit into internal groove 36 of housing 14 proximate housing second end 18. When retainer 34 is in position it acts to engage rod guide flexible assembly 20 to housing first end 16 with disc 38 therebetween. Installation of retainer 34 completes the rod guide assembly 10 by holding all of the aforementioned elements of the assembly 10 in place relative to each other.

While this invention has been described in terms of the preferred embodiments thereof, it is not intended to be so limited, but rather only to the extent set forth in the claims that follow.

## Claims

1. A guide assembly (10) for a rod (12) of a motor vehicle strut, comprising:
a tubular housing (14) about an axis (A), said housing having a first end (16) and a second end (18);
a disc (38) having a first surface (37) and a second surface (39) disposed within the housing, said disc first surface adjacent housing first end;
a flexible assembly (20) coaxially disposed within the housing adjacent the disc second surface (39), wherein the flexible assembly defines at least one opening for carrying a fluid;
a primary seal (26) positioned coaxially within the flexible assembly, said seal having an inside diameter engaging the rod and an outside diameter engaging the flexible assembly (20);
a rod guide (28) disposed adjacent the primary seal and coaxially within the flexible assembly;
a bearing (32) disposed adjacent the primary seal, said bearing positioned between the rod and the rod guide;
the flexible assembly (20) comprising a flexible member (22) molded to an inner insert (21) and an outer insert (23), said inner insert having an inner diameter adjacent the rod (12) and said outer insert having an outside diameter adjacent the housing (14);
a buffer seal (30) disposed adjacent the bearing and opposite the primary seal, said buffer seal coaxially positioned between the rod and the rod guide;
a retainer (34) disposed adjacent the buffer seal and coaxially within the housing, said retainer configured to press fit into a groove (36) at the second end (18) of the tubular housing, said retainer engaging said flexible assembly (20) and said first end (16) of tubular housing with said disc (38) disposed therebetween; whereby radial movement of the rod (12) induces deformation of a flexible member and negligible friction between the flexible member and the housing; and
wherein the rod guide (28) is made of a porous material compatible with MR fluid, said rod guide configured to filter the MR fluid and enable lubrication of bearing (32) and primary seal (26) with carrier fluid.

2. The guide assembly (10) in claim 1, wherein the tubular housing first end (16) is configured to receive the rod (12) and tubular housing second end (18) is configured to receive the retainer (34).

3. The guide assembly (10) in claim 1, wherein the disc (38) is made of a low friction material.

4. The guide assembly (10) in claim 3, wherein the disc (38) is made of Teflon.

5. The guide assembly (10) in claim 1, wherein the fluid is magneto-rheological (MR) fluid comprising ferroelectric microparticles suspended in a carrier fluid.

6. The guide assembly (10) in claim 1, wherein the primary seal (26) is made of a material resistant to high temperatures.

7. The guide assembly (10) in claim 1, wherein the buffer seal (30) isolates MR fluid from filtered MR fluid.

8. The guide assembly (10) in claim 1, wherein the retainer (34) comprising an outer diameter adapted to couple to an inner diameter groove (36) at second end (18) of housing (14) and captively hold flexible assembly (20) to housing.

## Patentansprüche

1. Eine Führungsbaugruppe (10) für eine Stange (12) einer Motorfahrzeugstrebe, aufweisend:
ein röhrenförmiges Gehäuse (14) um eine Achse (A), wobei das Gehäuse ein erstes Ende (16) und ein zweites Ende (18) aufweist;
eine Scheibe (38), die eine erste Oberfläche (37) und eine zweite Oberfläche (39) aufweist, welche innerhalb des Gehäuses angebracht sind, wobei die erste Oberfläche der Scheibe dem ersten Ende des Gehäuses benachbart ist;
eine flexible Baugruppe (20), die koaxial innerhalb des Gehäuses und der zweiten Oberfläche (39) der Scheibe benachbart angebracht ist, wobei die flexible Baugruppe zumindest eine Öffnung zum Leiten eines Fluids definiert;
eine primäre Dichtung (26), die koaxial innerhalb der flexiblen Baugruppe angebracht ist, wobei die Dichtung einen inneren Durchmesser zum Verbinden mit der Stange und einen äußeren Durchmesser zum Verbinden mit der flexiblen Baugruppe (20) aufweist;
eine Stangenführung (28), die der primären Dichtung benachbart und koaxial innerhalb der flexiblen Baugruppe angebracht ist;
ein Lager (32), das der primären Dichtung benachbart angebracht ist, wobei das Lager zwischen der Stange und der Stangenführung angebracht ist;
die flexible Baugruppe (20) aufweisend ein flexibles Bauteil (22), das mit einem inneren Einsatz (21) und einem äußeren Einsatz (23) gegossen ist, wobei das innere Einsatz einen inneren Durchmesser hat, welcher der Stange (12) benachbart ist, und wobei der äußere Einsatz einen äußeren Durchmesser hat, welcher dem Gehäuse (14) benachbart ist;
eine Pufferdichtung (30), die dem Lager benachbart und der primären Dichtung gegenüber angebracht ist, wobei die Pufferdichtung koaxial zwischen der Stange und der Stangenführung angebracht ist;
eine Halterung (34), die der Pufferdichtung benachbart und koaxial innerhalb des Gehäuses angebracht ist, wobei die Halterung zum Presspassen in eine Nut (36) hinein konfiguriert ist, die sich am zweiten Ende (18) des röhrenförmigen Gehäuses befindet, wobei die Halterung mit der flexiblen Baugruppe (20) und dem ersten Ende (16) des röhrenförmigen Gehäuses verbunden wird, wobei die Scheibe (38) zwischen denen angebracht ist; wobei eine radiale Bewegung der Stange (12) eine Deformation eines flexiblen Bauteils und eine vernachlässigbare Reibung zwischen dem flexiblen Bauteil und dem Gehäuse bewirkt; und
wobei die Stangenführung (28) aus einem porösen Material hergestellt ist, das mit MR-Fluid kompatibel ist, wobei die Stangenführung zum Filtern des MR-Fluids und zum Ermöglichen einer Schmierung des Lagers (32) und der primären Dichtung (26) mit Leitungsfluid konfiguriert ist.

2. Die Führungsbaugruppe (10) gemäß Anspruch 1, wobei das erste Ende (16) des röhrenförmigen Gehäuses zum Aufnehmen der Stange (12) konfiguriert ist und das zweite Ende (18) des röhrenförmigen Gehäuses zum Aufnehmen der Halterung (34) konfiguriert ist.

3. Die Führungsbaugruppe (10) gemäß Anspruch 1, wobei die Scheibe (38) aus einem Material mit geringer Reibung.

4. Die Führungsbaugruppe (10) gemäß Anspruch 3, wobei die Scheibe (38) aus Teflon hergestellt ist.

5. Die Führungsbaugruppe (10) gemäß Anspruch 1, wobei das Fluid ein magnetorheologisches (MR) Fluid ist, das ferroelektrische Mikropartikel aufweist, die in einem Leitungsfluid schwebt.

6. Die Führungsbaugruppe (10) gemäß Anspruch 1, wobei die primäre Dichtung (26) aus einem Material hergestellt ist, das beständig zu hohen Temperaturen ist.

7. Die Führungsbaugruppe (10) gemäß Anspruch 1, wobei die Pufferdichtung (30) MR-Fluid von gefiltertem MR-Fluid trennt.

8. Die Führungsbaugruppe (10) gemäß Anspruch 1, wobei die Halterung (34) einen äußeren Durchmesser aufweist, der zum Koppeln mit einer inneren Durchmesser-Nut (36) am zweiten Ende (18) des Gehäuses (14) und zum Festhalten der flexiblen Baugruppe (20) relativ zu dem Gehäuse eingerichtet ist.

## Revendications

1. Ensemble guide (10) pour une tige (12) d'une jambe de suspension pour un véhicule automobile, l'ensemble comprenant :
un boîtier tubulaire (14) autour d'un axe (A), ledit boîtier ayant une première extrémité (16) et une seconde extrémité (18),
un disque (38) ayant une première surface (37) et une seconde surface (39) qui sont disposées à l'intérieur du boîtier, ladite première surface de disque étant adjacente à la première extrémité du boîtier,
un ensemble flexible (20) disposé coaxialement à l'intérieur du boîtier, adjacent à la seconde surface de disque (39), l'ensemble flexible définissant au moins une ouverture pour le transport d'un fluide,
un joint primaire (26) positionné coaxialement à l'intérieur de l'ensemble flexible, ledit joint ayant un diamètre interne en prise avec la tige et un diamètre externe en prise avec l'ensemble flexible (20),
un guide de tige (28) disposé adjacent au joint primaire et coaxialement à l'intérieur de l'ensemble flexible,
un palier (32) disposé adjacent au joint primaire, ledit palier étant positionné entre la tige et le guide de tige,
l'ensemble flexible (20) comprenant un élément flexible (22) moulé sur un insert intérieur (21) et un insert extérieur (23), ledit insert intérieur ayant un diamètre interne adjacent à la tige (12) et ledit insert extérieur ayant un diamètre externe adjacent au boîtier (14),
un joint tampon (30) disposé adjacent au palier et à l'opposé du joint primaire, ledit joint tampon étant positionné coaxialement entre la tige et le guide de tige,
un élément de retenue (34) disposé adjacent au joint tampon et coaxialement à l'intérieur du boîtier, ledit élément de retenue étant configuré pour être adapté de force dans une rainure (36) à la seconde extrémité (18) du boîtier tubulaire, ledit élément de retenue étant en prise avec ledit ensemble flexible (20) et ladite première extrémité (16) du boîtier tubulaire, avec ledit disque (38) disposé entre ceux-ci, le mouvement radial de la tige (12) induisant une déformation d'un élément flexible et une friction négligeable entre l'élément flexible et le boîtier, et
le guide de tige (28) étant réalisé dans un matériau poreux compatible avec du fluide magnéto-rhéologique (MR), ledit guide de tige étant configuré pour filtrer le fluide magnéto-rhéologique (MR) et permettre la lubrification du palier (32) et du joint primaire (26) au moyen de fluide de transport.

2. Ensemble guide (10) suivant la revendication 1, dans lequel la première extrémité (16) du boîtier tubulaire est configurée pour recevoir la tige (12) et la seconde extrémité (18) du boîtier tubulaire est configurée pour recevoir l'élément de retenue (34).

3. Ensemble guide (10) suivant la revendication 1, dans lequel le disque (38) est réalisé dans un matériau à faible friction.

4. Ensemble guide (10) suivant la revendication 3, dans lequel le disque (38) est réalisé en Teflon.

5. Ensemble guide (10) suivant la revendication 1, dans lequel le fluide est un fluide magnéto-rhéologique (MR) comprenant des microparticules ferroélectriques dans un fluide de transport.

6. Ensemble guide (10) suivant la revendication 1, dans lequel le joint primaire (26) est réalisé dans un matériau résistant aux températures élevées.

7. Ensemble guide (10) suivant la revendication 1, dans lequel le joint tampon (30) isole le fluide magnéto-rhéologique (MR) du fluide magnéto-rhéologique (MR) filtré.

8. Ensemble guide (10) suivant la revendication 1, dans lequel l'élément de retenue (34) comprend un diamètre externe adapté à se coupler à une rainure de diamètre interne (36) au niveau de la seconde extrémité (18) du boîtier (14) et à retenir l'ensemble flexible (20) sur le boîtier.
